Europäisches Patentamt

European Patent Office

Office européen des brevets

(11) Publication number: **0 205 351**
**B1**

# EUROPEAN PATENT SPECIFICATION

(45) Date of publication of the patent specification:
23.08.89

(51) Int. Cl.⁴: **G 06 F 15/36**

(21) Application number: **86304488.9**

(22) Date of filling: **11.06.86**

(54) A mean square estimation circuit and a method of estimating the mean square of a succession of words.

(30) Priority: **11.06.85 GB 8514677**

(43) Date of publication of application:
**17.12.86 Bulletin 86/51**

(45) Publication of the grant of the patent:
**23.08.89 Bulletin 89/34**

(84) Designated Contracting States:
**AT BE CH DE FR GB IT LI LU NL SE**

(56) References cited:
**GB-A-1 601 749**
**US-A-3 807 630**

(73) Proprietor: **BRITISH TELECOMMUNICATIONS plc,**
**British Telecom Centre 81 Newgate Street,**
**London EC1A 7AJ (GB)**

(72) Inventor: **Cook, John Wolsey, 2 Manor Road**
**Martlesham Heath, Ipswich IP5 7SY (GB)**

(74) Representative: **Semos, Robert Ernest Vickers,**
**BRITISH TELECOM Intellectual Property Unit**
**13th Floor 151 Gower Street, London WC1E 6BA**
**(GB)**

EP 0 205 351 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

## Description

The present invention relates to mean-square estimation. A first aspect of the invention provides a mean-square estimation circuit comprising means for supplying a succession of N bit binary words to a convertor. A second aspect of the invention provides a method of estimating the mean-square of a succession of N bit binary words.

Systems for calculating or estimating the mean of a succession of binary words are well known and an example is shown United States Patent 3 807 630 of Stewart. However, many systems, for example digital signal processing systems, require the mean-square of a succession of binary words to be determined.

A system for estimating the mean of a succession of words raised to any power K is disclosed in British Patent 1 601 749 of Zorina. Here each binary word is quantised into eight levels. A value is stored for each level which is related to the power K. Each word is thereby reduced to a stored value and a succession of stored values are accumulated. In the present application (for estimating a mean square) K is equal to 2.

A problem with this known system is that it is quite complex. Furthermore the choice of quantising levels is arbitrary, more levels giving greater accuracy and greater complexity.

According to the aforesaid first aspect of the invention there is provided a mean-square estimation circuit comprising means for supplying a succession of N bit binary words to a converter; characterised by said convertor including means for setting all the ones of each binary word to zeros except for the most significant one to produce a succession of N bit single element words, and for then doubling the number of the less significant zeros after said most significant one of each N bit single element word and completing the remaining more significant bit positions with zeros to produce a succession of 2N bit single element words; an accumulator arranged to sum said 2N bit single element words; and means for reading the value stored in the accumulator which represents said estimate.

The value stored in the accumulator may leak thus allowing the value stored therein to converge. However in a preferred embodiment the value stored in the accumulator is read after said accumulator has received a predetermined number of words whereafter said accumulator is reset.

The converter may store each parallel N bit word and convert all the ones in said word to zeros except for the most significant one. However in a preferred embodiment the convertor includes a priority encoder which produces a code indicative of the position of the most significant one in each N bit word.

According to the aforesaid second aspect of the invention there is provided a method of estimating the mean-square of a succession of N bit binary words characterised by setting all the ones of each word to zero except for the most significant one to produce a succession of single element N bit words, doubling the number of the less significant zeros after the most significant one of each N bit single element word and completing the remaining more significant bit positions with zeros to produce a succession of 2N bit single element words, and accumulating the single element 2N bit words wherein the accumulated value represents an estimate of the mean square value of the N bit binary words.

An advantage of the present invention is that it provides an efficient system for estimating mean square values. The system of the present invention does not require complex circuitry nor does it require extensive programming or processor time. Furthermore the technique may be implemented for any word length without extensive evaluation.

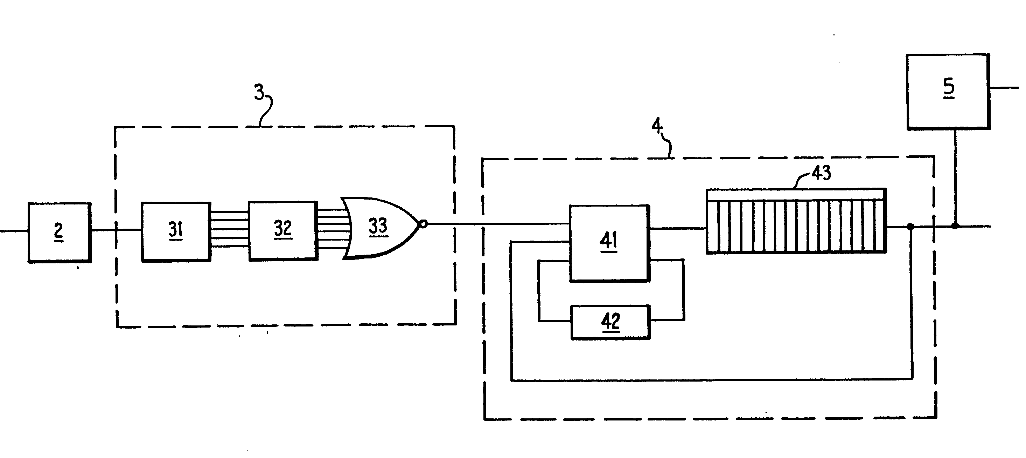

The invention will be described by way of example only with reference to the drawing which shows a circuit for estimating the mean-square value of digitally coded signals.

A circuit for estimating the mean-square value of a succession of digital words is shown in the Figure and consists of a decoder 2, a convertor 3, an accumulator 4 and a coder 5. The decoder 2 converts the digital signal to pure binary having N-bit parallel words - in this example N equals thirty-two.

The convertor 3 produces a 2N bit single element word by means of a priority encoder 31, a counter 32 and a NOR gate 33. The priority encoder 31 produces a five bit word which indicates the position of the most significant one in a thirty-two bit word thereby effectively converting all the ones in said thirty-two bit word to zeros except for the most significant one. A word in which only one bit is set to one is referred to herein as a single element word and said single element word may exist as the full word (having thirty-two bits) or as a coded representation having five bits in this example.

The five bit word is then supplied to the most significant bits of the counter 32 which has six bits. For each N bit word the counter 32 is decremented in response to 2N clock pulses and the count value is supplied to the NOR gate 33. The NOR gate 33 produces an output of one for an input of 000000 but produces an output of zero for all other inputs. Thus when the counter reaches zero a one is supplied to the accumulator.

The accumulator 4 receives clock pulses at the same rate as the counter 32. The accumulator consists of a summation circuit 41, a store 42 and a sixty-four bit shift register 43. The clock pulses are supplied to the shift register 43 which on receiving a clock pulse supplies the value stored at position 64 in the shift register to the summation circuit 41 where it is added to the output from the NOR gate 33 and then entered in position 1 of the shift register. After a word cycle, consisting of sixty-four clock pulses, the output from the NOR gate will have been one for only one of said pulses and the shift register will have circulated so that the value originally at position 1 will be back at position one.

After a predetermined number of word cycles (in this example one thousand) the value accumulated in the shift register 43 will be approximately equal to the mean-square value of the digital signal. This value is then read by the coder 5 and the shift register 43 is reset.

In an alternative embodiment the shift register is allowed to leak by multiplying the value stored therein by a factor during each cycle. In this way the shift register does not have to be reset and the mean-square estimate is continuously available.

## Claims

1. A mean-square estimation circuit comprising means for supplying a succession of N bit binary words to a converter (3); characterised by said converter (3) including means (31, 32, 33) for setting all the ones of each binary word to zero except for the most significant one to produce a succession of N bit single element words, and for then doubling the number of the less significant zeros after said most significant one of each N bit single element word and completing the remaining more significant bit positions with zeros to produce a succession of 2N bit single element words; an accumulator (4) arranged to sum said 2N bit single element words; and means (5) for reading the value stored in the accumulator which represents said estimate.

2. A mean-square estimation circuit according to claim 1 further characterised in that the value stored in the accumulator is read after said accumulator has received a predetermined number of words whereafter said accumulator is reset.

3. A mean-square estimation circuit according to claim 1 or claim 2 further characterised in that single element words are supplied serially to said accumulator.

4. A mean-square estimation circuit according to claim 3 further characterised in that the accumulator includes a shift register (43) the values stored within which are shifted as a single element word is received.

5. A mean-square estimation circuit according to any of claims 1 to 4 further characterised in that the converter includes a priority encoder (31) which produces a code indicative of the position of the most significant one in each N bit word.

6. A mean-square estimation circuit according to claim 5 further characterised in that the converter further includes a counter (32) which receives the output from the priority encoder, and the parallel outputs from said counter are supplied to a gate (33) which produces a serial single element 2N bit word.

7. A method of estimating the mean-square of a succession of N bit binary words characterised by setting all the ones of each binary word to zero except for the most significant one to produce a succession of single element N bit words, doubling the number of the less significant zeros after the most significant one of each N bit single element word and completing the more significant bit positions with zeros to produce a succession of 2N bit single element words, and accumulating the 2N bit single element words wherein the accumulated value represents an estimate of the mean square value of the N bit binary words.

8. A method according to claim 7 further characterised by resetting the accumulated value after a predetermined number of 2N bit single element words have been accumulated wherein the accumulated value is read prior to said reset.

## Patentansprüche

1. Schaltung für mittlere quadratische Abschätzung mit einer Einrichtung zum Zuführen einer Folge von N Bit Binärworten an einen Wandler (3), dadurch gekennzeichnet, daß der Wandler (3) eine Einrichtung (31, 32, 33) aufweist zum Setzen aller Einsen jedes Binärwortes auf Null mit Ausnahme der signifikantesten Eins, um eine Folge von N Bit Einzelelement-Worten zu erzeugen, und um danach die Anzahl der am wenigsten signifikanten Nullen nach der signifikantesten Eins jedes N Bit Einzelelement-Wortes zu verdoppeln, und die verbleibenden signifikanteren Bitpositionen mit Nullen aufzufüllen, um ein Folge von 2N Bit Einzelelement-Worten zu erzeugen; einen Akkumulator (4), der dazu eingerichtet ist, die 2N Bit Einzelelement-Worte zu summieren; und eine Einrichtung (5) zum Lesen des in dem Akkumulator gespeicherten Wertes, welcher den Schätzwert darstellt.

2. Schaltung für mittlere quadratische Abschätzung nach Anspruch 1, ferner dadurch gekennzeichnet, daß der in dem Akkumulator gespeicherte Wert gelesen wird, nachdem der Akkumulator eine vorbestimmte Anzahl von Worten empfangen hat, worauf der Akkumulator zurückgesetzt wird.

3. Schaltung für mittlere quadratische Abschätzung nach Anspruch 1 oder 2, ferner dadurch gekennzeichnet, daß Einzelelement-Worte seriell dem Akkumulator zugeführt werden.

4. Schaltung für mittlere quadratische Abschätzung nach Anspruch 3, ferner dadurch gekennzeichnet, daß der Akkumulator ein Schieberegister (43) aufweist, dessen darin gespeicherte Werte geschoben werden, wenn ein Einzelement-Wort empfangen wird.

5. Schaltung für mittlere quadratische Abschätzung nach einem der Ansprüche 1 bis 4, ferner dadurch gekennzeichnet, daß der Wandler einen Prioritäts-Kodierer (31) aufweist, der einen Code erzeugt, welcher für die Position der signifikantesten Eins in jedem N Bit-Wort anzeigekräftig ist.

6. Schaltung für mittlere quadratische Abschätzung nach Anspruch 5, ferner dadurch gekennzeichnet, daß der Wandler ferner einen Zähler (32) aufweist, der den Ausgang von dem Prioritäts-Kodierer empfängt, und die parallelen Ausgänge von dem Zähler an ein Gatter (33) geliefert werden, welches ein serielles Einzelelement 2N Bit-Wort erzeugt.

7. Verfahren zum Abschätzen des mittleren Quadrats einer Folge von N Bit Binärworten, gekennzeichnet durch Setzen aller Einsen jedes Binärwortes zu Null, mit Ausnahme der signifikantesten Eins, um eine Folge von Einzelelement N Bit-Worten zu erzeugen, Verdoppeln der Anzahl der am wenigsten signifikanten Nullen nach der signifikantesten Eins jedes N Bit Einzelelement-Wortes, und Auffüllen der verbleibenden signifikanteren Bitpositionen mit Nullen, um eine Folge von 2N Bit Einzelelement-Worten zu erzeugen, und Akkumulieren der 2N Bit Einzelelement-Worte, wobei der akkumulierte Wert einen Schätzwert für den mittleren quadratischen Wert jedes N Bit Binärwortes darstellt.

8. Verfahren nach Anspruch 7, ferner gekennzeichnet durch Rücksetzen des akkumulierten Wertes, nachdem eine vorbestimmte Anzahl von 2N Bit Einzelelement-Worten akkumuliert wurde, wobei der akkumulierte Wert vor dem Rücksetzen gelesen wird.

**Revendications**

1. Un circuit d'estimation de moyenne quadratique comprenant des moyens pour fournir une succession de mots binaires de N bits à un convertisseur (3); caractérisé en ce que ledit convertisseur (3) comprend des moyens (31, 32, 33) pour mettre tous les uns de chaque mot binaire à zéro sauf le plus significatif pour produire une succession de mots de N bits à élément unique, et pour doubler ensuite le nombre des zéros les moins significatifs après ledit un le plus significatif de chaque mot de N bit à élément unique et compléter les positions de bits les plus significatives avec des zéros pour produire une succession de mots de 2N bits à élément unique; un accumulateur (4) agencé pour sommer lesdits mots de 2N bits à élément unique; et des moyens (5) pour lire la valeur mémorisée dans l'accumulateur qui représente ladite estimation.

2. Un circuit d'estimation de moyenne quadratique selon la revendication 1 caractérisé en outre en ce que la valeur mémorisée dans l'accumulateur est lue après que ledit accumulateur a reçu un nombre prédéterminé de mots à la suite de quoi ledit accumulateur est remis à zéro.

3. Un circuit d'estimation de moyenne quadratique selon la revendication 1 ou la revendication 2 caractérisé en outre en ce que les mots à élément unique sont fournis sériellement audit accumulateur.

4. Un circuit d'estimation de moyenne quadratique selon la revendication 3 caractérisé en outre en ce que ledit accumulateur comprend un registre à décalage (43), les valeurs mémorisées dans celui-ci étant décalées lorsqu'un mot à élément unique est reçu.

5. Un circuit d'estimation de moyenne quadratique selon l'une quelconque des revendications 1 à 4 caractérisé en outre en ce que le convertisseur comprend un encodeur de priorité (31) qui produit un code indicatif de la position du un le plus significatif dans chaque mot de N bits.

6. Un circuit d'estimation de moyenne quadratique selon la revendication 5 caractérisé en outre en ce que le convertisseur comprend de plus un compteur (32) qui reçoit la sortie de l'encodeur de priorité, et en ce que les sorties parallèles dudit compteur sont envoyées à une porte (33) qui produit un mot sériel de 2N bits à élément unique.

7. Un procédé d'estimation de la moyenne quadratique d'une succession de mots binaires de N bits caractérisé par les étapes de mettre à zéro tous les uns de chaque mot binaire sauf le plus significatif pour produire une succession de mots de N bits à élément unique, doubler le nombre des zéros les moins significatifs après le un le plus significatif de chaque mot de N bits à élément unique et compléter les positions restantes de bits les plus significatives avec des zéros pour produire une succession de mots de 2N bits à élément unique et accumuler les mots de 2N bits à élément unique, la valeur accumulée représentant une estimation de la moyenne quadratique des mots binaires de N bits.

8. Un procédé selon la revendication 7 caractérisé en outre par la remise à zéro de la valeur accumulée après qu'un nombre prédéterminé de mots de 2N bits à élément unique ont été accumulés, la valeur accumulée étant lue avant la remise à zéro.